Europäisches Patentamt

European Patent Office

Office européen des brevets

(11) Publication number: **0 143 143**
A2

# (12) EUROPEAN PATENT APPLICATION

(21) Application number: **84102915.0**

(22) Date of filing: **16.03.84**

(51) Int. Cl.⁴: **B 23 B 27/16**

(30) Priority: **25.11.83 US 555016**

(43) Date of publication of application: **05.06.85**
Bulletin 85/23

(84) Designated Contracting States: **AT BE CH DE FR GB IT LI LU NL SE**

(71) Applicant: **Lindsay, Harold William, Lindsay Enterprises, Inc. 2451 N.W. 30th, Portland Oregon 97210 (US)**

(72) Inventor: **Lindsay, Harold William, Lindsay Enterprises, Inc. 2451 N.W. 30th, Portland Oregon 97210 (US)**

(74) Representative: **Frankland, Nigel Howard et al, FORRESTER & BOEHMERT Widenmayerstrasse 4/I, D-8000 München 22 (DE)**

(54) **A cutting tool.**

(57) A cutting tool provides a cutting insert receiving slot with a retaining lip to engage a face of the insert and prevent movement normal to its face. The insert has a centrally disposed keyway extending fully across one face. In one embodiment the lip engages the keyway; in another embodiment a locating pin engages the keyway to prevent longitudinal movement of the insert relative to the holder.

0143143

I

"A Cutting Tool"

This invention relates to cutting tools and, more particularly, to cutting tools utilizing indexable and replaceable carbide inserts for use in grooving and tapping.

Cutting tools are known wherein a replaceable carbide insert is disposed in a slot extending generally longitudinally inwardly from an end face of a holder. A clamping means retains the insert in the slot by engaging a cam-like recess in a side of the insert. The tool is designed so that the insert can be indexed on its transverse axis such that a plurality of cutting edges on the tool can be used sequentially. Inserts having such cam-like side recesses, however, are expensive.

It is an object of the present invention to provide a cutting tool of the above type that can use indexable and replaceable carbide inserts that are less expensive than inserts that have heretofore been available for this use.

According to this invention there is provided a cutting tool comprising: a holder for holding a cutting insert, the holder having an end face to be located adjacent a workpiece and defining a cutting insert receiving slot extending substantially longitudinally inwardly of the holder from the end face, the slot defining a bottom and a pair of opposed walls; a cutting insert received in the slot, the cutting insert having two cutting edges, the cutting edges being disposed at opposed ends of the insert, one side of the insert being supported by the bottom of the slot, one cutting edge of the insert extending outwardly of the slot substantially in the longitudinal direction of the holder, one face of the insert being provided with a centrally disposed keyway extending fully across the insert, the keyway engaging with part of the holder adjacent the slot to locate the insert relative to the holder and to prevent longitudinal movement thereof with respect to the holder, clamping means to engage the other side of the insert to clamp the insert into the slot to prevent movement of the insert normal to its face, the arrangement being such that, with the clamping means released, the insert may be indexed substantially about a transverse axis normal to its face and may then be re-clamped, the other cutting edge of the insert then extending outwardly of the slot substantially in the longitudinal direction of the holder.

Preferably one of said pair of walls is located adjacent the side of the holder and is cut substantially parallel to the bottom of the slot to form a retaining lip extending substantially normal to the bottom of the slot and substantially flush with the side of the holder.

Conveniently the retaining lip is cut to a length less than the length of the slot, and is disposed intermediate the ends of the slot.

In one embodiment the keyway has a dimension in the longitudinal direction of the holder equal to the length of the lip, the keyway having a dimension in the transverse direction of the holder equal to the dimension of the lip in the transverse direction, the lip constituting the said part of the holder adjacent the slot engaging the keyway to locate the insert longitudinally relative to the holder. Preferably the retaining lip and the keyway are each rectangular in cross section; and the face of the insert on which the keyway is provided is substantially flush with the said side of the holder.

In another embodiment a key is provided extending outwardly of the other wall and into the slot towards said lip substantially normal to the longitudinal direction of the slot, said key engaging the keyway provided in the cutting insert to locate the insert longitudinally relative to the holder.

Preferably the key comprises a locating pin extending transversely into the slot from the other said wall thereof.

Advantageously the slot is angularly disposed to the longitudinal axis of the holder, the wall forming the retaining lip being non-uniform in the transverse direction of the holder.

The insert may be of carbide on the like.

In order that the invention may be more readily understood, and so that further features thereof may be appreciated, the invention will now be described by way of example with reference to the accompanying drawings, in which:

FIGURE 1 is an exploded perspective view of one embodiment of the invention;

FIGURE 2 is a perspective assembled view of the embodiment of Figure 1 showing the clamping means in phantom;

FIGURE 3 is a perspective assembled view of another embodiment of the invention, also showing the clamping means in phantom;

FIGURE 4 is a top plan view of the embodiment of Figures 1 and 2;

FIGURE 5 is a side elevational view of the embodiment of Figures 1 and 2;

FIGURE 6 is a top plan view of the embodiment of Figure 3; and

FIGURE 7 is a side elevational view of the embodiment of Figure 3.

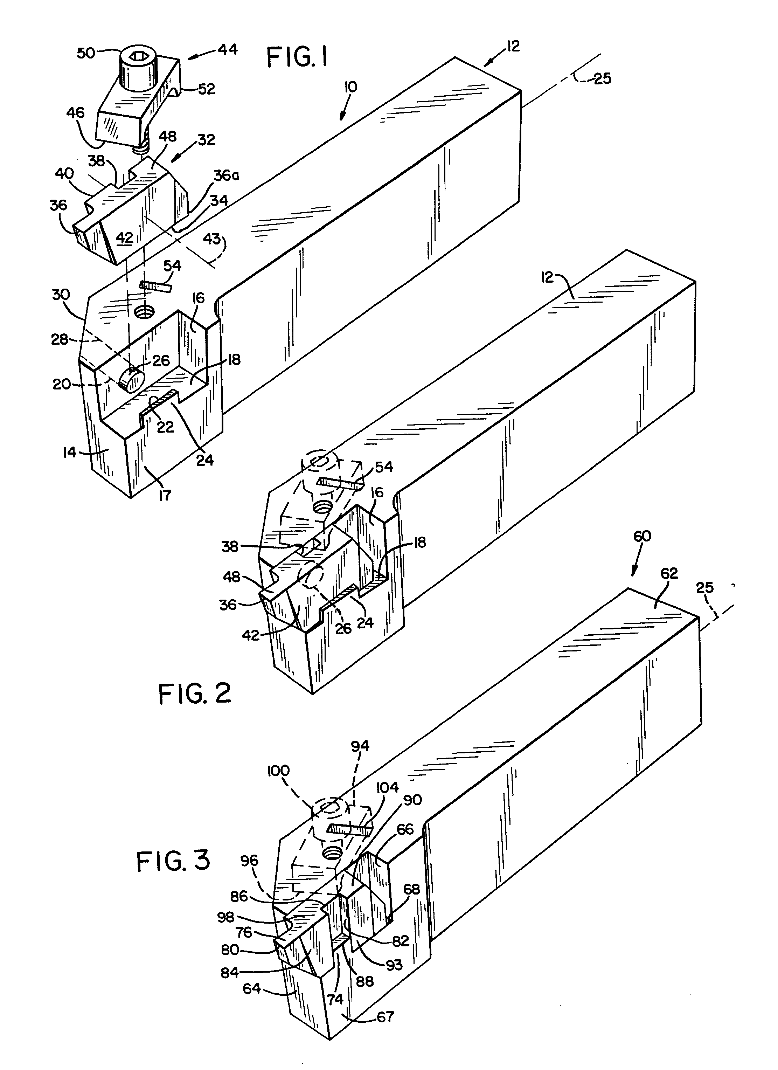

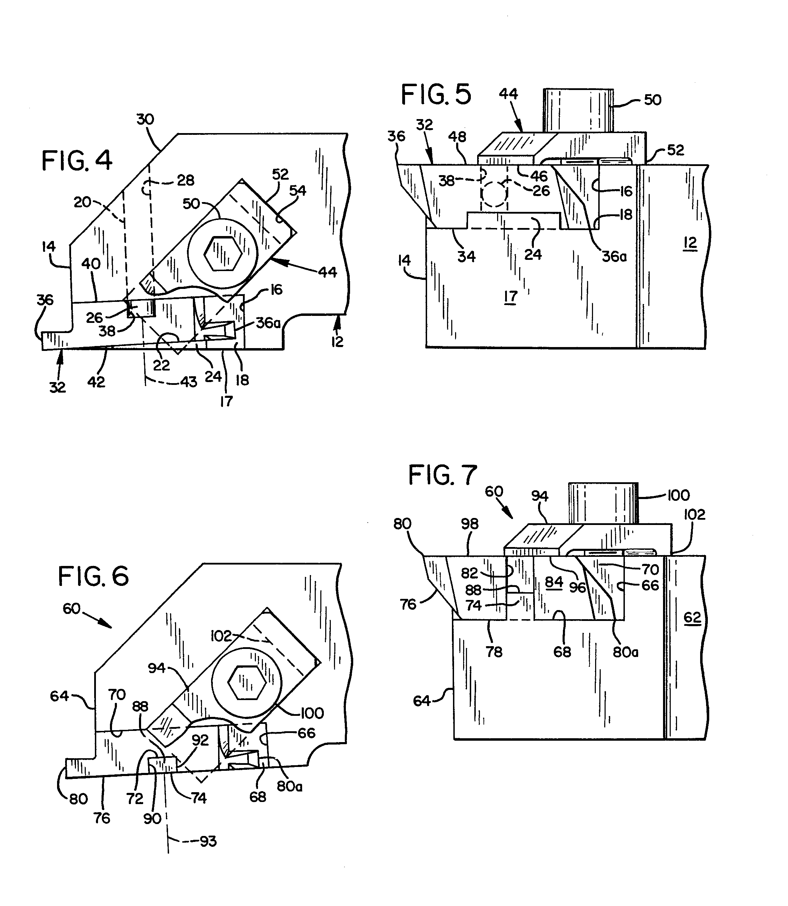

Referring to the drawings and particularly to Figures 1, 2, 4 and 5, a grooving tool 10 includes a holder 12 having an end face 14. A cutting insert receiving slot 16 is machined generally longitudinally inwardly from the end face 14. The slot 16 is adjacent a side 17 of the holder and defines a bottom 18 and a pair of opposed walls 20, 22 as shown.

The wall 22 is further machined parallel to the bottom 18 to form a retaining lip 24 which extends normal to the bottom and is flush with the side 17. The lip 24 is cut such that its length is less than the length of the slot 16 and such that it is disposed intermediate the ends thereof. The slot 16 is angularly disposed relative to the longitudinal axis 25 of the tool, and thus the lip 24 is nonuniform in the transverse direction of the holder, that is, it tapers in thickness in the transverse direction, as shown.

A locating key or pin 26 is received in a generally transversely extending hole 28 in one side 30 of the tool. The pin 26 extends outwardly from the wall 20 into the slot 16 in a direction normal to the longitudinal direction of the slot 16.

A cutting insert 32 is disposed in the slot 16 such that one side 34 is supported by the bottom 18. The cutting insert has two cutting edges 36, 36a which are located at opposite ends of the insert. In the position illustrated a cutting edge 36 extends outwardly of the slot 16 in the longitudinal direction of the holder for engaging a workpiece (not shown).

The insert 32 is provided with a centrally disposed keyway 38 which extends fully across the face 40 of the insert. When the insert 32 is placed in the slot 16, the pin 26 engages the keyway 38 to locate the insert 32 longitudinally relative to the tool holder 12 and prevent longitudinal movement with respect thereto. The lip 24 engages the face 42 which is opposite the face 40 to prevent movement of the insert normal to the face 40, that is, normal to the walls 20, 22. When the edge 36 becomes dull, the insert can be indexed on (i.e. rotated through $180^\circ$ about) its transverse axis 43 to present the other edge 36a for cutting.

A clamp member 44 is provided which has an inwardly disposed end 46 which contacts a side 48 of the insert 32. When a socket head capscrew 50 which passes through a bore in the clamp member 44 and engages an internally threaded bore in the upper surface of the holder 12 is tightened, a tail 52 provided on the clamp member is received in a slot 54 formed in the upper surface of the holder 12. The clamp member 44 thus retains the insert 32 within the slot 16, maintaining the face 42 in engagement with the lip 24, which prevents movement of the insert normal to its faces.

It can be seen that the tool 10 accurately retains the insert 32 within the slot 16. The pin 26 engages the keyway 38 to locate the insert accurately longitudinally relative to the holder 12 and to prevent longitudinal movement with respect thereto. The lip 24 engages the face 42 to prevent movement normal thereto. The clamp member 44 engages the exteriorly disposed side 48 of the insert to clamp it in the slot 16 and thus force it firmly into engagement with the lip 24.

In the embodiment shown in Figures 3, 6 and 7, a grooving tool 60 includes a holder 62 having an end face 64. A cutting insert receiving slot 66 is machined generally longitudinally inwardly from the end face 64. The slot 66 is adjacent a side 67 of the holder 62 and defines a bottom 68 and a pair of opposed walls 70, 72, as shown. In this embodiment the slot 66 is formed parallel to the side 67 such that the wall 72 is uniform in the transverse dimension.

The wall 72 is machined parallel to the bottom 68 of the slot 66 to form a retaining lip 74 which extends normal to the bottom 68 and is flush with the side 67 of the holder. The lip 74 is cut to a length less than the length of the slot and such that it is disposed intermediate the ends thereof.

A cutting insert 76 is disposed in the slot 66 such that one side 78 is supported by the bottom 68. The cutting insert has two cutting edges 80, 80a, which are located at opposite ends of the insert. In the position illustrated a cutting edge 80 extends outwardly of the slot 66 in the longitudinal direction of the holder 62 for engaging a workpiece (not shown).

The insert 76 is provided with a centrally disposed keyway 82 which extends fully across the face 84. The keyway is formed such that its length 86 is precisely equal to the length 88 of the lip 74. The keyway 82 has a dimension 90 in the transverse direction of the holder (depth) precisely equal to the dimension 92 (thickness) of the lip 74 in the transverse direction. Thus, when the insert 76 is placed in the slot 66, the lip 74 engages the keyway 82 longitudinally to locate the insert firmly relative to the holder 62 and to prevent longitudinal movement with respect thereto. The lip 74 also prevents movement normal to the face of the insert. Inasmuch as the retaining lip 74 and keyway 82 are each uniformly rectangular in cross section, the insert 76 is indexable on (i.e. rotatable through 180° about) its transverse axis 93 to present the other edge 80a for cutting. Because the thickness 92 of the lip is equal to the depth 90 of the keyway, the face 84 of the insert is flush with the side 67 of the holder.

A clamp member 94 has an inwardly depending end 96 which contacts a side 98 of the insert 76 such that when a socket head capscrew 100 which passes through a bore in the clamp member and engages a threaded bore in the upper surface of the holder 62 is tightened, a tail 102 present on the clamp 94 is received in a slot 104 in the upper surface of the holder 62. The clamp 94 retains the insert 76 within the slot 66, maintaining the keyway 82 in engagement with the lip 74 to prevent movement of the insert both longitudinally with respect to the holder and transversely with respect to its faces.

CLAIMS:

1. A cutting tool comprising: a holder for holding a cutting insert, the holder having an end face to be located adjacent a workpiece and defining a cutting insert receiving slot extending substantially longitudinally inwardly of the holder from the end face, the slot defining a bottom and a pair of opposed walls; a cutting insert received in the slot, the cutting insert having two cutting edges, the cutting edges being disposed at opposed ends of the insert, one side of the insert being supported by the bottom of the slot, one cutting edge of the insert extending outwardly of the slot substantially in the longitudinal direction of the holder, one face of the insert being provided with a centrally disposed keyway extending fully across the insert, the keyway engaging with part of the holder adjacent the slot to locate the insert relative to the holder and to prevent longitudinal movement thereof with respect to the holder, clamping means to engage the other side of the insert to clamp the insert into the slot to prevent movement of the insert normal to its face, the arrangement being such that, with the clamping means released, the insert may be indexed substantially about a transverse axis normal to its face and may then be re-clamped, the other cutting edge of the insert then extending outwardly of the slot substantially in the longitudinal direction of the holder.

2. A cutting tool according to claim 1 wherein one of said pair of walls is located adjacent the side of the holder and is cut substantially parallel to the bottom of the slot to form a retaining lip extending substantially normal to the bottom of the slot and substantially flush with the side of the holder.

3. A cutting tool according to claim 2 wherein the retaining lip is cut to a length less than the length of the slot.

4. A cutting tool according to claim 3 wherein the retaining lip is disposed intermediate the ends of the slot.

5. A cutting tool according to claim 4 wherein the keyway has a dimension in the longitudinal direction of the holder equal to the length of the lip, the keyway having a dimension in the transverse direction of the holder equal to the dimension of the lip in the transverse direction, the lip constituting the said part of the holder adjacent the slot engaging the keyway to locate the insert longitudinally relative to the holder.

6. A cutting tool according to claim 5 wherein the retaining lip and the keyway are each rectangular in cross section.

7. A cutting tool according to claim 5 or 6 wherein the face of the insert on which the keyway is provided is substantially flush with the said side of the holder.

8. A cutting tool according to any one of claims 2 to 4 wherein a key is provided extending outwardly of the other wall and into the slot towards said lip substantially normal to the longitudinal direction of the slot, said key engaging the keyway provided in the cutting insert to locate the insert longitudinally relative to the holder.

9. A tool according to claim 8 wherein the key comprises a locating pin extending transversely into the slot from the other said wall thereof.

10. A tool according to claim 8 or claim 9 wherein the slot is angularly disposed to the longitudinal axis of the holder, the wall forming the retaining lip being non-uniform in the transverse direction of the holder.

1/2                    0143143

FIG. 1

FIG. 2

FIG. 3

0143143

FIG. 4

FIG. 5

FIG. 6

FIG. 7